# DEMANDE DE BREVET EUROPEEN

(11) **EP 2 053 448 A1**
(43) Date de publication de la demande: **29.04.2009**
(21) Numéro de dépôt: 08290931.8
(22) Date de dépôt: 02.10.2008
(51) Int. Cl.: G02C 1/02

(54) **Lunettes de type sans entourage à branches filaires**

(30) Priorité: 26.10.2007 FR 0707531
(71) Demandeur: Minima, 91310 Linas (FR)
(72) Inventeur: Perie, Jean-Claude, 82000 Montauban (FR)
(74) Mandataire: Jaunez, Xavier

(57) **Abrégé**

L'invention concerne des lunettes du type sans entourage, comportant un pontet (13) reliant les deux verres de lunettes (V), et deux branches latérales de structure filaire (11) reliées à une zone latérale respective du verre (V) correspondant, chaque branche latérale (11) comportant une partie principale (11.2) ainsi qu'une extrémité distale (11.4) prolongeant ladite partie principale et agencée pour s'accrocher sur la zone latérale du verre (V), ladite extrémité distale ayant la forme générale d'un J.

Conformément à l'invention, chaque branche latérale (11) est équipée d'une charnière d'articulation (30) qui est agencée pour que la continuité de la section et du profil soit globalement assurée en position déployée de la branche latérale, afin de pouvoir passer par un perçage traversant (20 du verre (V), pour permettre une mise en place de ladite branche latérale par simple enfilage, dans sa position déployée, par le côté frontal du verre.

## Description

### DOMAINE DE L'INVENTION

La présente invention concerne le domaine des lunettes du type sans entourage, comportant un pontet reliant les deux verres de lunettes, et deux branches latérales reliées à une zone latérale respective du verre correspondant.

### ARRIERE-PLAN DE L'INVENTION

Les lunettes dites sans entourage, ou encore à monture percée du fait des perçages pratiqués dans l'épaisseur des verres pour la fixation de la monture, sont de plus en plus répandues.

On pourra se référer aux documents WO-2004/003632A, EP-1107042A, WO-96/05535A, US-6447117A, WO-00/26716A, EP-1382988A, WO-03/014804A, WO-02/095482A, WO-02/095481A, et US-5 880 807 A.

Dans la plupart des agencements précités, on prévoit dans chaque verre un perçage traversant et une encoche latérale débouchante, ou encore deux perçages traversants, pour chaque élément constitutif de la monture, à savoir le pontet et les deux branches latérales.

Le document US-5835183A prévoit des éléments de charnières qui sont fixés aux parties latérales des verres par une partie en forme de S, dont l'extrémité libre passe par un perçage traversant, et la branche centrale passe dans une encoche latérale débouchante. La partie terminale, formant ainsi une boucle, est conçue pour serrer élastiquement la partie de verre intermédiaire, ce serrage étant de plus renforcé par des éléments visant à augmenter la résistance à la friction, en particulier au moyen de dentures venant mordre la surface du verre correspondant au niveau du perçage traversant et de l'encoche latérale débouchante. Ceci présente toutefois l'inconvénient d'altérer la surface du verre ainsi rabotée par les dentures, et de fragiliser la zone du verre, qui est parfois étroite, enserrée entre les deux portions de branche formant une pince.

Les documents JP-2002/318 372 A et EP-0 814 359 A illustrent des montures filaires, dont les branches, avec articulation, ou sans articulation mais avec déformation en flexion, présentent des extrémités distales en forme de crochet, avec une portion terminale de branche passant dans une encoche latérale débouchante du verre, et une portion courte de serrage passant dans un perçage du verre, ces deux portions formant une pince qui serre la partie du verre qui est entre le perçage et l'encoche latérale débouchante pour assurer le maintien en place de la branche. Le serrage du verre est d'ailleurs encore renforcé dans l'agencement du document JP-2002/318 372 A du fait de l'inclinaison de la portion courte vers la portion terminale de branche, et de l'inclinaison correspondante de l'axe du perçage du verre, avec un éventuel manchon interposé dans l'encoche pour former par sa bride une entretoise qui évite un relâchement du serrage.

Le document WO-02/21193 A illustre une variante des montures précédentes, dans laquelle les branches latérales à extrémité distale conformée en crochet sont cintrées en arrière des verres après avoir été enfilées, le maintien étant alors assuré par un pliage adjacent à la face arrière des verres. Un tel processus est fastidieux et exige de nombreuses opérations qui ne peuvent être effectuées que manuellement.

Il a par ailleurs été proposé de réaliser des lunettes du type sans entourage dont les branches latérales sont déformables en flexion sans articulation. On utilise pour cela une technique de formage mettant à profit les capacités de mémoire de forme de certains alliages métalliques. Pour la fixation de tels types de branches déformables en flexion sans articulation, on utilise en général un encastrement de pions passant dans des perçages, comme cela est par exemple décrit dans les documents WO-03/083553A et US-5 367 344A.

Dans la plupart des cas, les extrémités d'accrochage des branches latérales présentent une configuration complexe, avec de multiples cintrages, ce qui implique un coût de fabrication élevé. De plus, il est parfois nécessaire d'effectuer ces cintrages in situ, après avoir enfilé une extrémité rectiligne et non encore cintrée de branche dans un perçage du verre, ce qui est particulièrement incommode pour l'opérateur.

Plus récemment, il a été proposé des lunettes du type sans entourage à branches de structure filaire déformables en flexion sans articulation, chaque branche latérale comportant une partie principale ainsi qu'une extrémité distale prolongeant ladite partie principale et agencée pour s'accrocher sur la zone latérale du verre, ladite extrémité distale ayant la forme générale d'un J, et comportant une portion de maintien passant dans un perçage traversant du verre avec interposition d'un manchon souple de serrage qui assure à lui seul le maintien en place de l'extrémité distale, et une portion d'anti-rotation passant dans une encoche latérale débouchante ou dans un autre perçage traversant du verre, sans serrer le verre entre ladite portion de maintien et ladite portion d'anti-rotation, la portion centrale joignant la portion de maintien et la portion d'anti-rotation s'étendant au voisinage de la face frontale du verre, comme cela est enseigné dans le document US-7,264,348 B2 de la demanderesse.

L'enseignement du document précité est d'utiliser des branches latérales de structure filaire et déformables en flexion sans articulation, pour avoir un composant filaire unitaire pouvant être mis en place par simple enfilage par le côté frontal du verre, en passant dans le perçage traversant, l'absence de surépaisseur permettant un enfilage aisé, en particulier en passant dans le manchon souple de serrage déjà mis en place dans le perçage traversant associé.

### OBJET DE L'INVENTION

La présente invention vise à proposer des lunettes du type sans entourage qui sont très performantes, à la fois par la simplicité de leur structure et par la commodité de leur montage.

### DEFINITION GENERALE DE L'INVENTION

Ce problème est résolu conformément à l'invention grâce à des lunettes du type sans entourage, comportant un pontet reliant les deux verres de lunettes, et deux branches latérales de structure filaire reliées à une zone latérale respective du verre correspondant, chaque branche latérale comportant une partie principale ainsi qu'une extrémité distale prolongeant ladite partie principale et agencée pour s'accrocher sur la zone latérale du verre, ladite extrémité distale ayant la forme générale d'un J, et comportant une portion de maintien passant dans un perçage traversant du verre avec interposition d'un manchon souple de serrage qui assure à lui seul le maintien en place de l'extrémité distale, et une portion d'anti-rotation passant dans une encoche latérale débouchante ou dans un autre perçage traversant du verre, sans serrer le verre entre ladite portion de maintien et ladite portion d'anti-rotation, la portion centrale joignant la portion de maintien et la portion d'anti-rotation s'étendant au voisinage de la face frontale du verre, lunettes dans lesquelles chaque branche latérale est équipée d'une charnière d'articulation qui est agencée pour que la continuité de la section et du profil soit globalement assurée en position déployée de la branche latérale, afin de pouvoir passer par le perçage traversant du verre, pour permettre une mise en place de ladite branche latérale par simple enfilage, dans sa position déployée, par le côté frontal du verre.

Ainsi, grâce à l'invention, on met à profit l'enseignement du document US-7,264,348 B2 précité en vue d'une application aux montures à branches latérales articulées.

Conformément à un mode de réalisation particulier, la charnière d'articulation de chaque branche latérale est prévue sur la partie principale de ladite branche.

Selon une première variante, l'extrémité distale en forme de J de chaque branche latérale comprend une portion longue et une portion courte respectivement constituées par la portion de maintien et la portion d'anti-rotation de ladite extrémité distale, ladite portion longue se raccordant à la portion principale de la branche par un coude permanent formant un angle obtus, et la charnière d'articulation est prévue au niveau dudit coude permanent.

Selon une autre variante, l'extrémité distale en forme de J de chaque branche latérale comprend une portion longue et une portion courte respectivement constituées par la portion de maintien et la portion d'anti-rotation de ladite extrémité distale, et la charnière d'articulation est prévue sur la portion longue de l'extrémité distale en forme de J.

De préférence, la charnière de chaque branche latérale est réalisée par emboîtement de deux extrémités homologues, sans augmentation de la section transversale au niveau de la charnière par rapport aux tronçons filaires qui sont de part et d'autre de ladite charnière.

On pourra en variante prévoir que la charnière de chaque branche latérale est réalisée par emboîtement de deux extrémités homologues d'un manchon en légère surépaisseur par rapport aux tronçons filaires qui sont de part et d'autre de ladite charnière. Dans ce cas, il sera avantageux de prévoir que le manchon souple de serrage qui assure le maintien en place de l'extrémité distale de chaque branche latérale est fendu selon une génératrice, afin de pouvoir franchir la charnière lors de son enfilage préliminaire sur ladite branche en position déployée de celle-ci, avant l'enfilage de la branche latérale par le côté frontal du verre.

D'autres caractéristiques et avantages de l'invention apparaîtront plus clairement à la lumière de la description qui va suivre, en référence aux figures des dessins annexés qui illustrent un mode de réalisation préféré.

### BREVE DESCRIPTION DES DESSINS

Il sera fait référence aux figures des dessins annexés, où :
- la figure 1 illustre en perspective des lunettes du type sans entourage à branches filaires articulées conformes à l'invention ;
- la figure 2 est une vue de dessus des lunettes précitées, vue sur laquelle les extrémités d'accrochage des branches latérales sont vues par transparence ;
- les figures 3 et 4 sont des vues partielles en perspective, à plus grande échelle, permettant de mieux distinguer la zone d'accrochage d'une branche latérale selon deux variantes de réalisation ;
- la figure 5 est une coupe selon V-V de la figure 3, illustrant en a) la géométrie de la charnière en position déployée de la branche latérale, et en b) la géométrie en position repliée de la même branche ;
- les figures 6 et 7 sont des vues analogues à celle de la figure 5a), illustrant deux variantes dans lesquelles la charnière est prévue à un emplacement différent de la branche latérale ;
- les figures 8 et 9 sont des vues respectivement de dessus et de côté d'une branche latérale, dont l'extrémité proximale ne présente aucun élément de recouvrement tel que manchon ou boule, cette situation correspondant au montage initial de la branche latérale ;
- la figure 10 est une vue schématique illustrant les différentes positions relatives entre la branche latérale précitée et le verre correspondant au fur et à mesure de l'enfilage par le côté frontal du verre, sans que la charnière ne génère une quelconque interférence;
- les figures 11 et 12 sont des vues en perspective et de dessus d'une autre variante, dans laquelle un manchon en légère surépaisseur est prévu au niveau de la charnière ;
- la figure 13 est une vue de détail à échelle très agrandie de la charnière de la monture des figures 11 et 12 ; et
- la figure 14 est une vue schématique illustrant les différentes étapes successives a) à h) de mise en place, avec d'abord l'enfilage du manchon souple de serrage sur la branche, puis l'enfilage de la branche ainsi équipée en passant par le perçage traversant du verre.

### DESCRIPTION DETAILLEE DU MODE DE REALISATION PREFERE

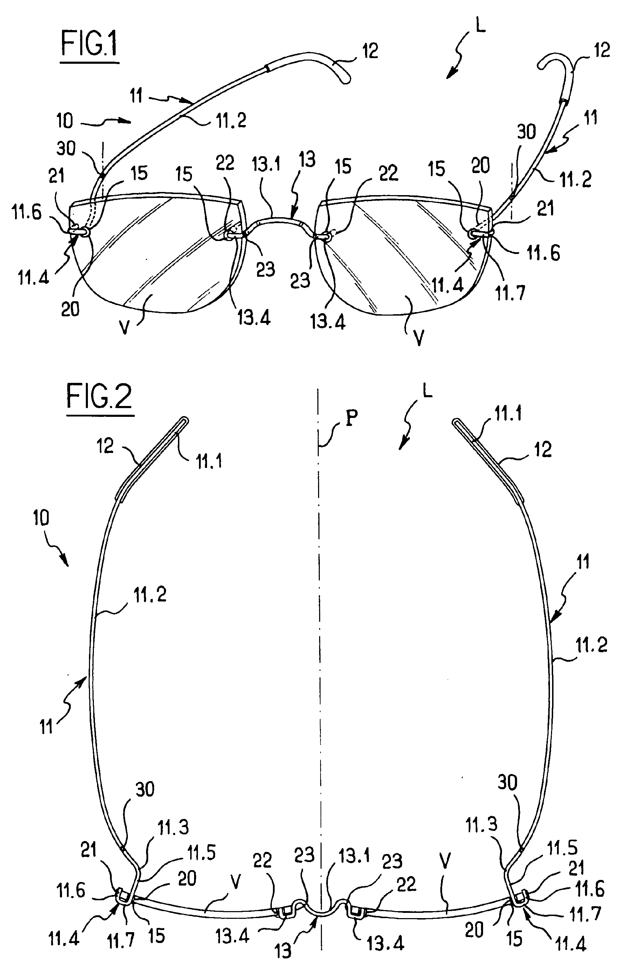

Comme représenté sur les figures 1 et 2, l'invention concerne des lunettes du type sans entourage. Ces lunettes comportent deux verres V et une monture 10 qui est de type filaire. La monture 10 comporte un pontet 13 reliant les deux verres de lunettes V, et deux branches latérales de structure filaire 11 reliées à une zone latérale respective du verre V correspondant, et équipées chacune d'une charnière 30.

En l'espèce, les extrémités proximales 11.1 des branches latérales 11 sont revêtues d'un élément de recouvrement 12, qui peut être un manchon, ou en variante une boule ou analogue.

Chaque branche latérale 11 présente ainsi successivement une extrémité proximale 11.1, ici revêtue d'un manchon 12, puis une partie principale 11.2 qui est légèrement cintrée, et s'étend jusqu'à un coude permanent 11.3 formant un angle obtus. Au-delà de ce coude 11.3, on trouve une extrémité distale 11.4 qui est agencée pour s'accrocher sur la zone latérale du verre V correspondant.

Cette extrémité distale 11.4 a la forme générale d'un J (en vue de dessus ou en vue de dessous selon la branche qui est observée), avec une portion longue de maintien 11.5 et une portion courte d'anti-rotation 11.6, lesdites portions étant raccordées entre elles par une portion centrale 11.7.

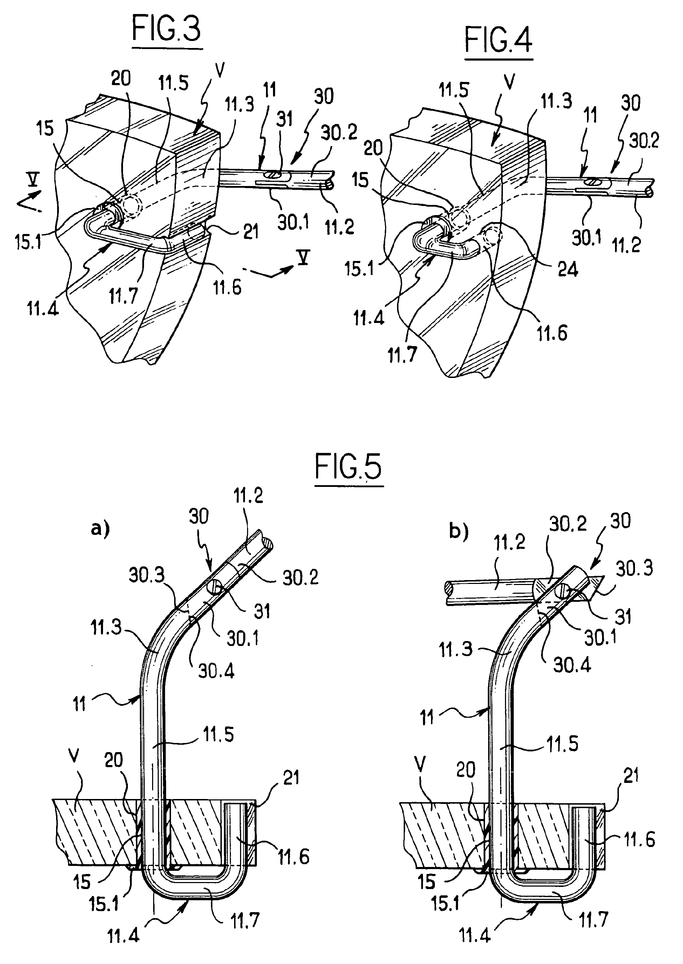

La portion longue de maintien 11.5 prolongeant la partie principale 11.2 de la branche passe dans un perçage traversant 20 du verre V avec interposition d'un manchon souple de serrage 15 qui assure à lui seul le maintien en place de l'extrémité distale 11.4, et la portion courte d'anti-rotation 11.6 revenant vers l'arrière passe soit dans une encoche latérale débouchante 21, comme cela est mieux visible sur le détail de la figure 3, soit en variante dans un autre perçage traversant 24, comme cela est visible sur le détail de la figure 4, et ce sans serrer le verre entre la portion longue 11.5 et la portion courte 11.6, la portion centrale 11.7 s'étendant quant à elle au voisinage de la face frontale du verre V.

Le pontet 13, de structure également filaire, est quant à lui de conception classique, avec une partie principale cintrée 13.1, et des extrémités latérales 13.4 d'accrochage qui coopèrent avec un perçage 22 et une encoche latérale débouchante 23 du verre V correspondant pour la liaison entre le pontet et les deux verres de lunettes. On distingue ainsi les portions d'accrochage 13.4 du pontet, qui s'accrochent sur la zone du verre correspondant par simple élasticité. On pourra d'ailleurs prévoir, pour les extrémités du pontet qui passent dans un trou traversant 22 l'interposition d'un manchon souple de serrage analogue aux manchons 15 utilisés pour le maintien des branches latérales. On pourra également prévoir un pontet de structure différente, en particulier agencé pour porter des plaquettes nasales.

On constate en l'espèce que l'extrémité distale 11.4 en forme de J de chaque branche latérale 11 s'étend dans un plan sensiblement horizontal. Ceci permet d'éviter toute torsion parasite de la branche lors des manoeuvres de celle-ci.

En outre, la portion longue 11.5 d'extrémité distale de chaque branche latérale 11 se raccorde à la partie principale 11.2 de la branche par un coude permanent 11.3 formant un angle obtus. De plus, cette portion longue 11.5 s'étend depuis l'arrière du verre V en étant rectiligne sur une distance au moins égale à l'épaisseur du verre. Ceci permet de faciliter un éventuel dégagement ultérieur pour démonter la branche latérale.

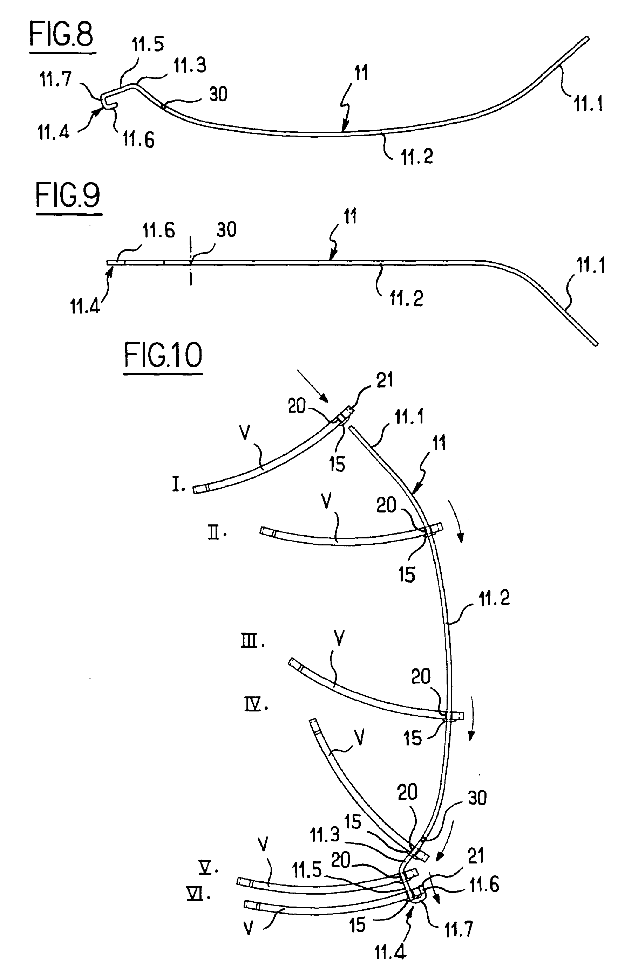

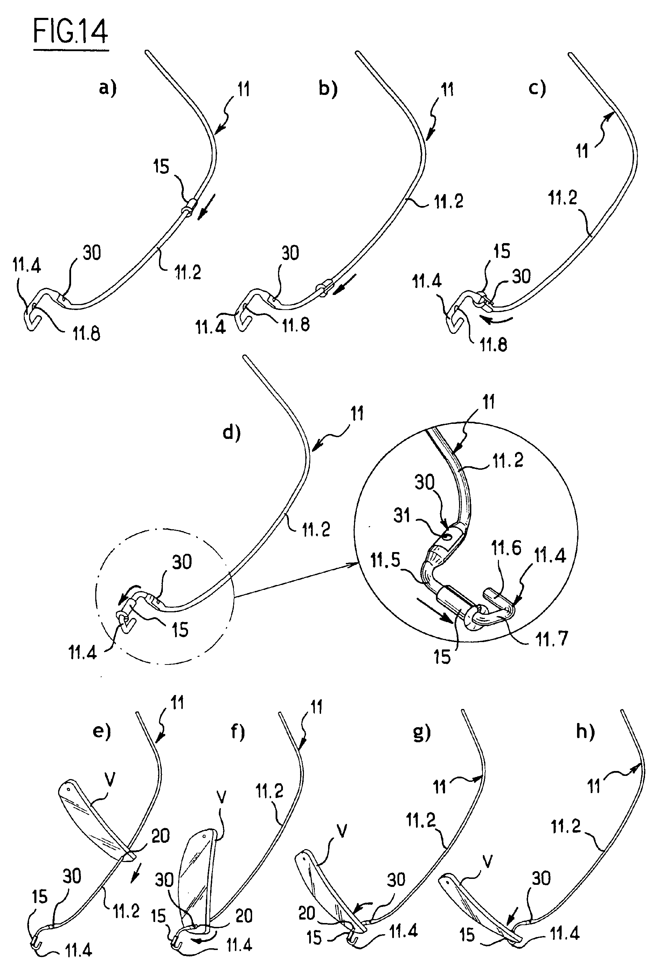

On distingue en outre un manchon souple de serrage 15, qui présente ici à une extrémité une collerette 15.1 venant en appui contre une face du verre V correspondant. Dans la pratique, et comme on le verra par la suite en référence à la figure 10 ou à la figure 14, le montage de chaque branche latérale 11 se fait par simple enfilage par le côté frontal du verre, de sorte qu'il apparaît préférable de disposer le manchon souple 15 de telle façon que sa collerette 15.1 vienne en appui contre la face frontale du verre. Ceci permet de s'assurer que le manchon souple de serrage 15 ne sera pas expulsé lors du passage de la branche latérale.

En l'espèce, le manchon souple de serrage 15 est une pièce rapportée qui est insérée dans le perçage correspondant du verre. On pourra en variante prévoir que le manchon souple de serrage 15 est réalisé in situ lorsque la branche latérale associée 11 est en place, par moulage ou injection de matière plastique, par exemple du silicone, dans le perçage correspondant du verre.

Comme cela est visible sur la figure 5, on constate que la portion courte 11.6, qui est ici reçue dans l'encoche latérale débouchante 21, n'enserre pas la partie concernée du verre en formant une pince comme c'était fréquemment le cas dans les agencements antérieurs. La portion courte 11.6 sert en l'espèce seulement à assurer une fonction d'anti-rotation, le maintien en place de la branche étant exclusivement assuré par la portion longue 11.5 qui est bloquée dans son manchon souple de serrage 15.

Conformément à une caractéristique essentielle de l'invention, et ainsi que cela est mieux visible sur la figure 5, chaque branche latérale 11 est équipée d'une charnière d'articulation 30 qui est agencée pour que la continuité de la section et du profil soit globalement assurée en position déployée de la branche latérale (position a) de la figure 5) afin de pouvoir passer par le perçage traversant 20 du verre V, pour permettre une mise en place de la branche latérale 11 par simple enfilage, dans sa position déployée, par le côté frontal du verre.

La charnière 30 relie deux extrémités de fil 30.1, 30.2, la fixation étant assurée par une vis ou un rivet 31 qui fait également office de charnière. En l'espèce, l'extrémité 30.2 a une forme de lame, avec un bord terminal 30.3 en biseau, et l'extrémité 30.1 a une forme de chape, avec un fond oblique 30.4 servant de butée pour la position déployée de la branche.

Dans la position a) de la figure 5, le profil et la section de la branche latérale 11 restent identiques au passage de la charnière 30, ce qui permet l'enfilage de la branche par le perçage traversant 20 exactement comme si la branche était déformable en flexion sans articulation, en particulier avec un manchon souple de serrage 15 qui est déjà mis en place dans le perçage traversant 20 associé.

Dans la position b) où la branche latérale 11 est repliée, la géométrie est différente, avec des parties en saillie au niveau de la charnière 30.

La figure 4 illustre une variante dans laquelle la portion courte d'anti-rotation 11.6 revenant vers l'arrière passe non pas dans une encoche latérale débouchante comme s'était le cas précédemment, mais dans un autre perçage traversant 24 du verre. La disposition est par ailleurs identique à celle qui a été décrite en référence aux figures précédentes, avec la même charnière 30 assurant la continuité de la section et du profil en position déployée de la branche latérale 11, les vues explicatives a) et b) de la figure 5 restant valables.

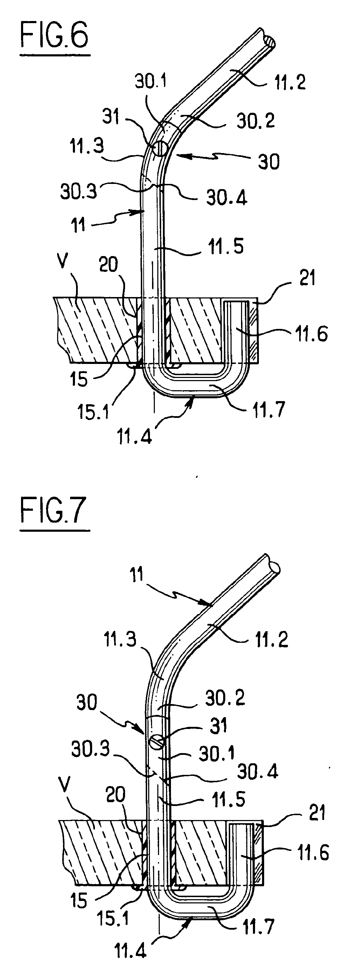

Les figures 6 et 7, qui sont à rapprocher de la vue a) de la figure 5, illustrent deux autres variantes pour lesquelles la charnière d'articulation 30 n'est plus prévue sur la partie principale 11.2 de la branche latérale 11 (comme c'était le cas dans les figures précédentes), mais respectivement au niveau du coude permanent 11.3 formant un angle obtus (figure 6), ou sur la portion longue 11.6 de l'extrémité distale 11.4 en forme de J (figure 7).

Là encore, on retrouve la continuité de la section et du profil en position déployée (illustrée aux figures 6 et 7) de la branche latérale 11.

Ainsi, dans tous les cas de figure, chaque branche latérale 11 comporte une partie principale 11.2 et une portion longue 11.5 d'extrémité distale qui sont conformées en section et en profil pour passer dans le perçage traversant 20 du verre V, pour permettre une mise en place de ladite branche latérale par simple enfilage par le côté frontal du verre, et ce malgré la présence d'une charnière 30 dont l'agencement évite justement toute interférence lors de cet enfilage.

Les figures 8 et 9 permettent de mieux distinguer la conformation d'une branche latérale 11, et on notera que son extrémité proximale 11.1 n'est pas revêtue d'un manchon ou analogue. Cette branche latérale 11 sera de préférence réalisée en fil métallique, en particulier en fil d'acier inoxydable chirurgical, avec une section ronde qui est éventuellement localement aplatie verticalement au niveau de sa partie principale 11.2 afin d'augmenter la flexibilité de ladite branche dans les directions de manoeuvre de celle-ci.

Sur la figure 10, on a illustré le processus de mise en place, qui est réalisé manuellement, d'une branche latérale par simple enfilage par le côté frontal du verre correspondant V.

Sur cette figure, on a illustré diverses positions relatives entre le verre et la branche latérale.

Sur la position I, le bout de l'extrémité proximale 11.1 de la branche 11 est en face du perçage traversant 20, ici garni de son manchon souple de serrage 15, de façon à être prêt pour l'enfilage.

Les positions II, III, IV et V correspondent à des positions successives d'enfilage, au cours desquelles différentes parties de la branche filaire passent dans le perçage traversant 20 garni de son manchon souple 15, y inclus le passage de la charnière 30, jusqu'à arriver à l'extrémité distale d'accrochage 11.4 de ladite branche. La dernière phase de déplacement, pour arriver à la position finale VI, est un simple coulissement rectiligne qui va amener la portion courte 11.6 dans l'encoche latérale débouchante 21 du verre.

On constate donc que la branche latérale 11 est montée rapidement et aisément, et sans l'aide d'un quelconque outil, tout en conservant l'avantage de la compacité en position repliée des branches latérales, qui résulte de la présence de charnières d'articulation agencées en conséquence.

Si l'on souhaite ensuite désolidariser l'ensemble, il suffit de procéder de façon inverse, ce qui permet de changer la branche latérale en conservant le même verre ou inversement.

Comme indiqué plus haut, le manchon souple de serrage 15, qu'il soit constitué par une pièce rapportée ou réalisé in situ par moulage ou injection dans le perçage du verre, assure seul le maintien en place de l'extrémité distale d'accrochage 11.4. On pourra par exemple utiliser un matériau souple tel que du polyamide 6 ou du silicone, ces matériaux étant en outre transparents pour une plus grande discrétion.

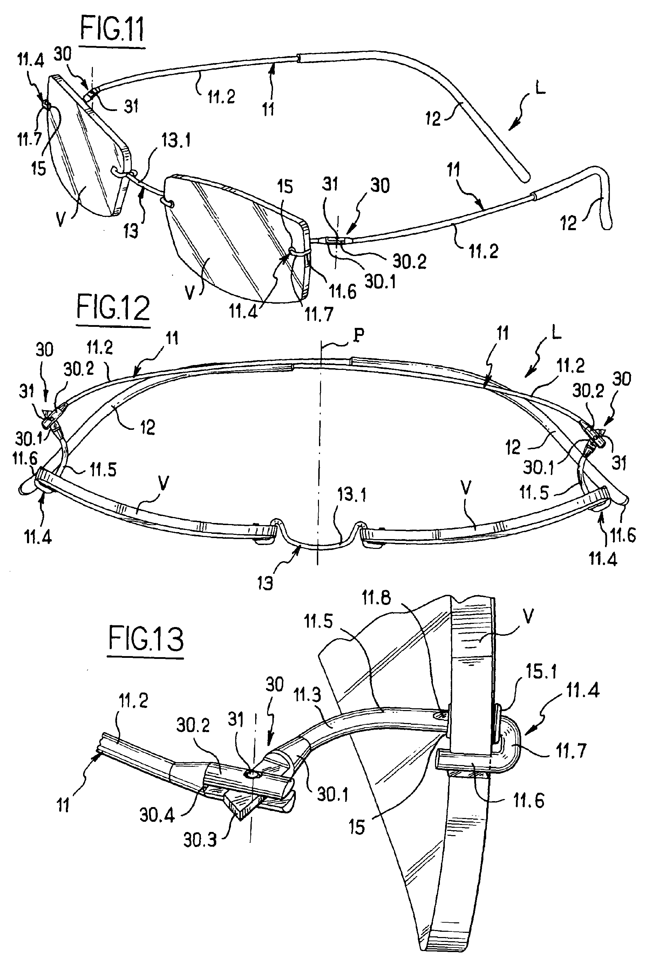

Les figures 11 à 13 illustrent une autre variante dans laquelle, en position déployée de la branche latérale, la continuité de la section et du profil n'est pas totale au niveau de la charnière d'articulation 30, mais reste néanmoins globalement assurée pour toujours permettre d'enfiler la branche par le perçage traversant 20 du verre V. On notera sur la figure 13 la présence d'une zone aplatie localement 11.8 pour l'extrémité distale 11.4, cette zone formant une excroissance locale qui favorise l'accrochage de la partie d'extrémité de branche dans son manchon de maintien 15.

Ainsi, pour cette dernière variante, la charnière 30 de chaque branche latérale 11 est réalisée non plus par emboîtement de deux extrémités homologues 30.1 et 30.2 sans augmentation de la section transversale par rapport aux tronçons filaires qui sont de part et d'autre de ladite charnière, mais par emboîtement de deux extrémités homologues 30'.1, 30'.2 d'un manchon en légère surépaisseur par rapport auxdits tronçons filaires. Le maintien en place sera de préférence assuré par un rivet 31 plutôt que par une vis. A titre indicatif, le manchon en surépaisseur constituant la charnière 30 aura un diamètre de 1,7 mm, à rapporter à un diamètre de fil d'un millimètre.

Cette légère surépaisseur amènera en général à éviter l'enfilage de la branche latérale avec le passage de la charnière lorsque le manchon souple de serrage 15 est en place dans le perçage traversant 20 associé. Il sera alors prévu que le manchon souple 15 soit alors pré-enfilé sur la branche et positionné en bout de branche, au voisinage de la portion centrale 11.7, et inséré dans le perçage traversant 20 une fois que la charnière d'articulation 30 a dépassé ledit perçage. Pour que le manchon souple 15 puisse franchir sans dommage la charnière 30, on préférera prévoir un manchon fendu selon une génératrice, comme cela est illustré sur la figure 14. On pourra aussi prévoir un matriçage de la tête de rivet, pour avoir un calibrage cylindrique parfait de la charnière.

La figure 14 illustre ainsi l'enfilage préliminaire du manchon souple 15 sur une branche latérale 11 (étapes a) à d)), avec pour cette dernière un détail agrandi permettant de mieux distinguer le manchon souple fendu), puis l'enfilage de la branche latérale 11 ainsi équipée de son manchon souple 15, en passant par le perçage traversant 20 du verre V (étapes e) à h)).

L'invention n'est pas limitée au mode de réalisation qui vient d'être décrit, mais englobe au contraire toute variante reprenant, avec des moyens équivalents, les caractéristiques essentielles énoncées plus haut.

## Revendications

1. Lunettes du type sans entourage, comportant un pontet (13) reliant les deux verres de lunettes (V), et deux branches latérales de structure filaire (11) reliées à une zone latérale respective du verre (V) correspondant, chaque branche latérale (11) comportant une partie principale (11.2) ainsi qu'une extrémité distale (11.4) prolongeant ladite partie principale et agencée pour s'accrocher sur la zone latérale du verre (V), ladite extrémité distale ayant la forme générale d'un J, et comportant une portion de maintien (11.5) passant dans un perçage traversant (20) du verre (V) avec interposition d'un manchon souple de serrage (15) qui assure à lui seul le maintien en place de l'extrémité distale (11.4), et une portion d'anti-rotation (11.6) passant dans une encoche latérale débouchante (21) ou dans un autre perçage traversant (24) du verre, sans serrer le verre entre ladite portion de maintien et ladite portion d'anti-rotation, la portion centrale (11.7) joignant la portion de maintien (11.5) et la portion d'anti-rotation (11.6) s'étendant au voisinage de la face frontale du verre (V), **caractérisées en ce que** chaque branche latérale (11) est équipée d'une charnière d'articulation (30) qui est agencée pour que la continuité de la section et du profil soit globalement assurée en position déployée de la branche latérale, afin de pouvoir passer par le perçage traversant (20) du verre (V), pour permettre une mise en place de ladite branche latérale par simple enfilage, dans sa position déployée, par le côté frontal du verre.

2. Lunettes selon la revendication 1, **caractérisées en ce que** la charnière d'articulation (30) de chaque branche latérale (11) est prévue sur la partie principale (11.2) de ladite branche.

3. Lunettes selon la revendication 1, **caractérisées en ce que** l'extrémité distale en forme de J (11.4) de chaque branche latérale (11) comprend une portion longue (11.5) et une portion courte (11.6) respectivement constituées par la portion de maintien et la portion d'anti-rotation de ladite extrémité distale, ladite portion longue (11.5) se raccordant à la portion principale (11.2) de la branche par un coude permanent (11.3) formant un angle obtus, et la charnière d'articulation (30) est prévue au niveau dudit coude permanent (11.3).

4. Lunettes selon la revendication 1, **caractérisées en ce que** l'extrémité distale en forme de J (11.4) de chaque branche latérale (11) comprend une portion longue (11.5) et une portion courte (11.6) respectivement constituées par la portion de maintien et la portion d'anti-rotation de ladite extrémité distale, et la charnière d'articulation (30) est prévue sur la portion longue (11.5) de l'extrémité distale en forme de J (11.4).

5. Lunettes selon l'une des revendications 1 à 4, **caractérisées en ce que** la charnière (30) de chaque branche latérale (11) est réalisée par emboîtement de deux extrémités homologues (30.1, 30.2), sans augmentation de la section transversale au niveau de la charnière (30) par rapport aux tronçons filaires qui sont de part et d'autre de ladite charnière.

6. Lunettes selon l'une des revendications 1 à 4, **caractérisées en ce que** la charnière (30) de chaque branche latérale (11) est réalisée par emboîtement de deux extrémités homologues (30'.1, 30'.2) d'un manchon en légère surépaisseur par rapport aux tronçons filaires qui sont de part et d'autre de ladite charnière.

7. Lunettes selon la revendication 6, **caractérisées en ce que** le manchon souple de serrage (15) qui assure le maintien en place de l'extrémité distale (11.4) de chaque branche latérale (11) est fendu selon une génératrice, afin de pouvoir franchir la charnière (30) lors de son enfilage préliminaire sur ladite branche en position déployée de celle-ci, avant l'enfilage de la branche latérale (11) par le côté frontal du verre (V).
